# EUROPÄISCHE PATENTSCHRIFT

(11) **EP 1 060 945 B1**
(45) Veröffentlichungstag und Bekanntmachung des Hinweises auf die Patenterteilung: **09.02.2005**
(21) Anmeldenummer: 00104587.1
(22) Anmeldetag: 14.03.2000
(51) Int. Cl.: B60Q 1/04, B60Q 1/00, B60Q 1/26

(54) **Fahrzeugleuchte mit verstellbarer Befestigung**
Vehicle lights with adjustable fixation
Feux de véhicule à fixation ajustable

(30) Priorität: 12.06.1999 DE 19926842
(43) Veröffentlichungstag der Anmeldung: 20.12.2000
(73) Patentinhaber: VALEO Beleuchtung Deutschland GmbH, 74321 Bietigheim-Bissingen (DE)
(72) Erfinder: Feger, Rolf, 74321 Bietigheim-Bissingen (DE); Lendle, Reiner, 74855 Hammersheim (DE)
(74) Vertreter: Dreiss, Fuhlendorf, Steimle & Becker

(56) Entgegenhaltungen:
- EP-A- 0 652 142
- DE-C- 3 629 124
- DE-C- 19 546 703
- FR-A- 2 746 728
- FR-A- 2 749 236

## Beschreibung

Die Erfindung betrifft eine Fahrzeugleuchte mit verstellbarer Befestigung, insbesondere Heckleuchte für Kraftfahrzeuge, mit den Merkmalen des Oberbegriffs des Anspruchs 1.

Es ist weit verbreitet, dass Fahrzeugleuchten in einer bestimmten Anordnung oder Ausrichtung im Verhältnis zur Fahrzeugkarosserie an dieser angebaut werden, um einerseits eine ordnungsgemäße Funktion der Fahrzeugleuchten und andererseits bestimmte, stilistische Merkmale des Fahrzeuges sicherzustellen. Häufig ist dabei vorgesehen, die Fahrzeugleuchten schlüssig bzw. bündig in entsprechende Ausnehmungen oder Mulden oder Vertiefungen oder dergleichen an der Fahrzeugkarosserie einzubauen. Dieses kann sich aber schwierig gestalten, wenn die Fahrzeugkarosserie am vorgesehenen Anbauort der Fahrzeugleuchte mit Toleranzen behaftet ist, welche zu einem unerwünschten Versatz der Fahrzeugleuchte in bezug auf die Fahrzeugkarosserie führen. Dieses Problem kann noch verstärkt im Heckbereich von Fahrzeugen, insbesondere von Personenkraftwagen, auftreten, wenn die Fahrzeugleuchte schlüssig bzw. bündig in Bezug auf eine angrenzende Kofferraumklappe oder Hecktür ausgerichtet bzw. angeordnet sein soll, welche als separates Karosserieteil an der starren Fahrzeugkarosserie angebracht ist. Durch Fertigungstoleranzen im Karosseriebereich oder an der Kofferraumklappe bzw. Hecktür selbst bzw. durch Montagetoleranzen der Kofferraumklappe bzw. Hecktür an der Fahrzeugkarosserie kann es auch hier zu einem unerwünschten Versatz zwischen der Fahrzeugleuchte und der Klappe oder Tür kommen. Aus den vorstehenden Gründen besteht seitens der Fahrzeughersteller der Wunsch nach einer entsprechenden Verstell- bzw. Justiermöglichkeit an der Fahrzeugleuchte.

Eine gattungsgemäße, mit einer Lagerverstellung ausgestattete Fahrzeugleuchte ist aus der EP-A-0 841 214 bekannt. An dem betreffenden Befestigungspunkt des Leuchtengehäuses ist eine Verstellbuchse über eine Art Trapezgewinde mit einem relativ großen Flankenspiel verdrehbar in einer Durchgangsöffnung des Leuchtengehäuses gelagert. Bei am Fahrzeug angebauter Fahrzeugleuchte liegt die rückwärtige Stirnseite der Verstellbuchse an der Fahrzeugkarosserie an, und eine Befestigungsschraube durchgreift axial die Verstellbuchse und ist in eine Gewindebohrung der Karosserie eingeschraubt. Der Schraubenkopf drückt auf die andere Stirnseite der Verstellbuchse und verspannt diese dadurch gegen die Karosserie. Durch die Veränderung der Einschraubtiefe der Verstellbuchse in der Durchgangsöffnung des Leuchtengehäuses ist eine Verstellung des Abstandes der Fahrzeugleuchte in bezug auf die Karosserie möglich, wobei die Veränderung dieser Einschraubtiefe nach dem Lockern der Befestigungsschraube vorgenommen werden kann. Um im vorliegenden Fall ein Spiel zwischen der gegen die Karosserie verspannten Verstellbuchse und dem Leuchtengehäuse auszuschließen, verlaufen die zueinander parallel angeordneten, gegenüberliegenden Stirnflächen der Verstellbuchse nicht rechtwinkelig zu der Mittelachse der Verstellbuchse bzw. zu der Mittelachse der Befestigungsschraube. Beim Festziehen der Befestigungsschraube wird die Verstellbuchse deshalb in Bezug auf die Mittelachse der Verstellschraube verkippt, wodurch wiederum die Flanken des Gewindes der Verstellbuchse gegen die Flanken des Gewindes der Durchgangsöffnung des Leuchtengehäuses spielfrei verspannt werden. Dieses alles setzt aber einen in Bezug auf den Außendurchmesser der Befestigungsschraube deutlich größeren Innendurchmesser der Verstellbuchse voraus, um die Verkippbewegung zu ermöglichen.

Nachteilig hierbei ist jedoch, dass durch die Verkippbewegung der Verstellbuchse beim Festziehen der Befestigungsschraube das Leuchtengehäuse entsprechend der Winkelstellung der Einstellbuchse in eine seitliche Richtung verschoben wird, was in Summe eine ungenaue Montage in seitlicher Richtung zur Folge hat, die mehrere Millimeter betragen kann. Weiterhin muss die Einstellbuchse maßlich genau an die Durchgangsöffnung des Leuchtengehäuses angepasst sein, um den spielfreien Sitz der Fahrzeugleuchte an der Karosserie zu gewährleisten.

Aus der DE-C-195 46 703, der DE-C-36 29 124 und der FR-A-2,749,236 ist jeweils ein Befestigungselement für ein Scheinwerfergehäuse bekannt. Das Befestigungselement ist als Einstellschraube ausgebildet, so dass das Scheinwerfergehäuse in seiner Lage eingestellt werden kann. Zum Einstellen sind aber mehrere Einstellschrauben erforderlich. Aus der FR-A-2,746 728 ist eine Einrichtung zur Vormontage eines Scheinwerfergehäuses bekannt. Mit dieser Einrichtung wird der Scheinwerfer gehalten, bis er mittels Schrauben fixiert worden ist.

Aufgabe der Erfindung ist es, eine Fahrzeugleuchte mit einer einfachen, genauen und funktionssicheren Verstellmöglichkeit bereitzustellen.

Diese Aufgabe wird mit einer Fahrzeugleuchte gelöst, die die Merkmale des Anspruchs 1 aufweist.

Eine solche Fahrzeugleuchte weist als verstellbares Befestigungselement für die Befestigung an der Fahrzeugkarosserie einen Gewindebolzen auf, der starr an dem Gehäuse der Fahrzeugleuchte befestigt ist und von dessen Rückseite abragt. Dieser Gewindebolzen ist von der Außenseite her durch eine Aussparung in der Fahrzeugkarosserie hindurchsteckbar, so dass an der Innenseite der Fahrzeugkarosserie eine Befestigungsmutter auf ein an dem Gewindebolzen vorhandenes Einstellgewinde aufschraubbar ist, welche auf die Innenseite der Fahrzeugkarosserie wirkt. Um an diesem Befestigungspunkt eine einfache, funktionssichere und genaue Verstellung der Fahrzeugleuchte in ihrem Verhältnis zur Fahrzeugkarosserie im wesentlichen in axialer Richtung des Gewindebolzens zu ermöglichen, ist zwischen dem Gehäuse der Fahrzeugleuchte und der Befestigungsmutter zusätzlich eine Einstellmutter auf dem Gewindebolzen angeordnet. Bei am Fahrzeug angebauter Fahrzeugleuchte ist die Einstellmutter gegen die Außenseite der Fahrzeugkarosserie verspannt, während die Befestigungsmutter gegen die gegenüberliegende Innenseite der Fahrzeugkarosserie verspannt ist. Die Position der Einstellmutter auf dem Gewindebolzen bestimmt somit die Einstecktiefe des Gewindebolzens in die Aussparung der Fahrzeugkarosserie, wodurch die Position der Fahrzeugleuchte im Verhältnis zur Fahrzeugkarosserie in axialer Richtung des Gewindebolzens bestimmt wird.

Beim erstmaligen Anbau der Fahrzeugleuchte an die Fahrzeugkarosserie muss also einmal die erforderliche Einstecktiefe des Gewindebolzens in die Aussparung der Fahrzeugkarosserie bestimmt werden, und die Einstellmutter muss in die entsprechende Position auf dem Gewindebolzen gebracht werden. Bei jedem weiteren Ab- bzw. Anbauvorgang der Fahrzeugleuchte kann eine Neujustierung der verstellbaren Befestigung unterbleiben, wenn die Position der Einstellmutter auf dem Befestigungsbolzen nicht verändert wird. Derartige An- und Abbauvorgänge können beispielsweise dann erforderlich sein, wenn im Bereich der Fahrzeugleuchte Lackierarbeiten erforderlich werden oder wenn für einen Wechsel der Lichtquelle ein An- und Abbau der Fahrzeugleuchte erforderlich ist.

Dabei sind erfindungsgemäß die nicht verstellbaren Befestigungselemente als Einsteckzapfen ausgebildet, die jeweils in eine entsprechende Aussparung in der Fahrzeugkarosserie einsteckbar, insbesondere einschnappbar, ausgestaltet sind. Dadurch wird eine wesentliche Vereinfachung der Montage der Fahrzeugleuchte an der Fahrzeugkarosserie ermöglicht, weil nur an dem verstellbar ausgebildeten Befestigungselement nach einer einmaligen Justierung der Einstellmutter eine Befestigungsmutter aufgeschraubt werden muss.

Erfindungsgemäß verlaufen die Mittelachsen der Einsteckzapfen in einem von 0° bzw. 180° verschiedenen Winkel zur Mittelachse des Gewindebolzens, vorzugsweise jedoch in einem Winkel von etwa 90°. Dadurch wird eine sichere Montage der Fahrzeugleuchte gewährleistet.

An dem Gehäuse sind drei auf den Eckpunkten eines Dreiecks liegende Befestigungselemente vorgesehen, wobei eines der Befestigungselemente verstellbar und die anderen beiden nicht verstellbar ausgebildet sind. Damit ist einerseits eine sichere, kippfreie Befestigung der Fahrzeugleuchte gewährleistet, und andererseits ist mit einfachen technischen Mitteln die gewünschte Verstellbarkeit der Fahrzeugleuchte im Verhältnis zur Fahrzeugkarosserie möglich. In diesem Fall erfolgt allerdings bei Verstellung der Einstellmutter des verstellbaren Befestigungselements eine geringfügige Schwenkbewegung der beiden anderen Befestigungselemente relativ zur Fahrzeugkarosserie. Die beiden nicht verstellbaren Befestigungselemente müssen deshalb so ausgebildet sein, dass sie diese geringfügige Schwenkbewegung kompensieren können.

Erfindungsgemäß ist die von dem Gewindebolzen durchgriffene Aussparung durch eine elastische Dichtung abgedichtet. Dies hat den Vorteil, dass die Innenseite der Fahrzeugkarosserie, an der beispielsweise ein Fahrgastraum oder ein Gepäckraum oder dergl. liegen kann, gegenüber der Außenseite der Fahrzeugkarosserie im Bereich der Fahrzeugleuchte gegen das Eindringen von Schmutz oder Feuchtigkeit gesichert ist.

Eine andere vorteilhafte Ausführungsform der Erfindung weist eine elastische Dichtung in Form eines Dichtringes oder einer Dichtungsscheibe auf, die zwischen der Einstellmutter und der Fahrzeugkarosserie oder zwischen der Befestigungsmutter und der Fahrzeugkarosserie angeordnet und zwischen diesen eingespannt ist.

Nach einer erfindungsgemäßen alternativen Ausgestaltung der Erfindung ist die elastische Dichtung zwischen der Fahrzeugkarosserie und der Stirnseite eines an das Gehäuse angeformten hülsenartigen Aufnahmedomes für den Gewindebolzen eingespannt.

Eine vorteilhafte Weiterbildung der Erfindung besteht darin, dass die Einstellmutter und die Befestigungsmutter über ein Distanzstück derartig gegeneinander verspannt sind, dass ein eine Mindestgröße aufweisender Aufnahmeraum für die elastische Dichtung gebildet ist. Dadurch wird eine beschädigungsfreie Einspannung der Dichtung gewährleistet, so dass diese auch bei mehrfacher Demontage und Montage der Fahrzeugleuchte wieder verwendbar ist, also nicht durch eine neue ersetzt werden muss.

Bei einer vorteilhaften Ausführungsform der Erfindung ist das Distanzstück ein separates Bauteil, insbesondere eine innerhalb der Aussparung der Fahrzeugkarosserie zwischen der Einstellmutter und der Befestigungsmutter angeordnete Unterlegscheibe entsprechender Dicke. Dabei ist die Verwendung eines Normteiles kostengünstig.

Nach einer erfindungsgemäßen Ausgestaltung der Erfindung ist das Distanzstück einstückig mit der Einstellmutter und/oder mit der Befestigungsmutter ausgebildet. Dadurch wird eine einfachere Handhabung der Befestigungsmittel ermöglicht.

Nach einer weiteren vorteilhaften Ausgestaltung der Erfindung umfasst das Distanzstück einen Anschlag an der einen Mutter, der mit einem Gegenanschlag an der anderen Mutter zusammenwirkt.

Vorteilhaft sind an der Einstellmutter von der Fahrzeugkarosserieinnenseite zugängliche Betätigungsmittel zur Verstellung der Einstellmutter vorgesehen. Dadurch ergibt sich die Möglichkeit der Verstellung der Fahrzeugleuchte auch nach deren Einbau in die Fahrzeugkarosserie.

Bevorzugt weist die Einstellmutter einen radial abstehenden Bund zur Anlage an den die Aussparung umgebenden Bereich der Fahrzeugkarosserie auf. Außerdem ragt die Einstellmutter, zumindest teilweise, durch die Aussparung auf die von der Fahrzeugleuchte abgewandten Seite der Fahrzeugkarosserie hindurch. Dadurch wird, zum einen, die Justierung der Fahrzeugleuchte an der Fahrzeugkarosserie erleichtert und, zum anderen, die Möglichkeit gegeben, die Fahrzeugleuchte auch von der Karosserieinnenseite zu verstellen.

Nach einer weiteren vorteilhaften Ausgestaltung der Erfindung sind an dem durch die Aussparung in der Fahrzeugkarosserie hindurchragenden Teil der Einstellmutter Mittel zur Betätigung der Einstellmutter vorgesehen, insbesondere Mittel für die Betätigung mit einem Spezialwerkzeug. Mittel zur Betätigung der Einstellmutter können hierbei beispielsweise Aussparungen, in Form von Schlitzen, Kreuzschlitzen oder dergl. auf der Stirnseite der Einstellmutter sein. Dabei kann die Einstellmutter auch als Einstellschraube ausgebildet sein, mit einer, dem Gewindebolzen abgewandten, geschlossenen Stirnseite.

Bei einer anderen vorteilhaften Weiterbildung der Erfindung ist der durch die Aussparung in der Fahrzeugkarosserie hindurchragende Teil der Einstellmutter mit einem Gewinde versehen, mit welchem die Befestigungsmutter verschraubbar ist. Es ist dabei denkbar, dass das Gewinde an der Mantelfläche des durch die Aussparung ragenden Teils der Einstellmutter angeordnet ist. Durch ein solches Gewinde wird ein einfaches Verstellen der Fahrzeugleuchte und eine daran anschließende Fixierung der Einstellung der Fahrzeugleuchte auf einfache Weise ermöglicht.

Besonders bevorzugt ist die Befestigungsmutter für eine manuelle Betätigung ausgebildet, vorzugsweise als Flügeloder Rändelmutter. Dadurch wird ein einfaches und schnelles Wechseln der Fahrzeugleuchte ermöglicht.

Gemäß einer vorteilhaften Ausführungsform der Erfindung, sind die Einstellmutter und die Befestigungsmutter von gewöhnlicher, herkömmlicher Art, vorzugsweise allgemein gebräuchliche und damit kostengünstige Normteile.

Nach einer weiteren vorteilhaften Ausgestaltung der Erfindung ist die Einstellmutter, in Bezug das Einstellgewinde selbsthemmend ausgebildet. Dadurch wird ein exaktes Einstellen der Fahrzeugleuchte ermöglicht und auf zusätzliche Sicherungsmaßnahmen, gegen ein Verdrehen der Einstellmutter, kann verzichtet werden.

Weitere Vorteile und vorteilhafte Ausgestaltung der Erfindung sind der nachfolgenden Beschreibung, Zeichnung und den Ansprüchen entnehmbar.

Verschiedene Ausführungsbeispiele des Gegenstandes der Erfindung sind in der Zeichnung dargestellt und im Folgenden näher beschrieben. Es zeigen:
- Figur 1: eine eingebaute Kraftfahrzeugheckleuchte in Vorderansicht,
- Figur 2: einen Schnitt durch eine Fahrzeugheckleuchte in Draufsicht,
- Figur 3 - 7: verschiedene Ausgestaltungen des verstellbaren Befestigungselements im Längsschnitt.

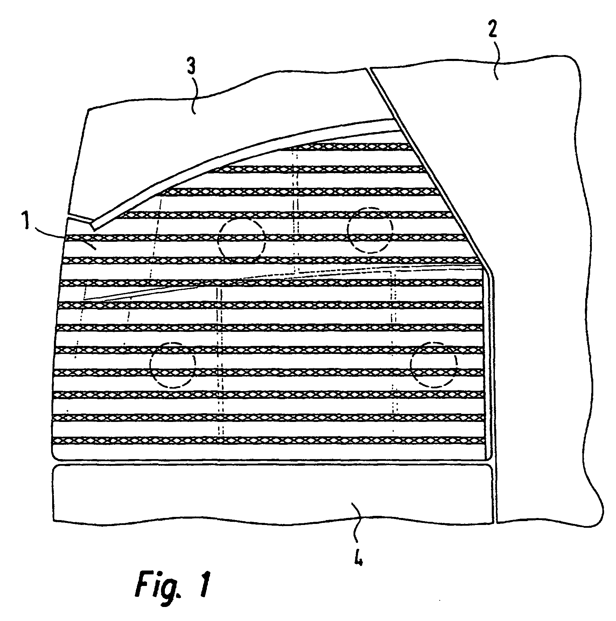

Die Figur 1 zeigt eine Fahrzeugleuchte 1, welche zwischen einer Kofferraumklappe 2, einem Kotflügel 3 und einer Fahrzeugkarosserie bzw. eines Stoßstangenansatzes 4 angeordnet ist. Es ist deutlich erkennbar, dass die Fahrzeugleuchte 1 bündig bzw. schlüssig mit der sichtbaren Kante des Kotflügels 3, der Kofferraumklappe 2 oder des Stoßstangenansatzes 4 abschließt.

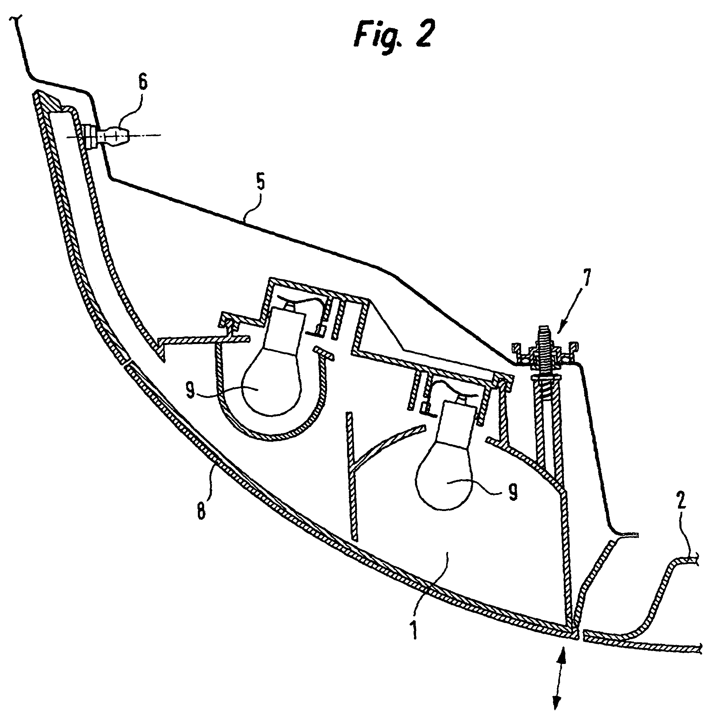

Die Figur 2 zeigt die Fahrzeugleuchte 1 sowie einen Abschnitt der Fahrzeugkarosserie 5, wobei die Fahrzeugleuchte 1 einerseits durch nicht verstellbare Festigungselemente, hier einen Einsteckzapfen 6, sowie mittels eines verstellbaren Befestigungselements 7 an der Fahrzeugkarosserie 5 angebracht ist. Hinter einer Lichtscheibe 8 sind dabei im Leuchteninneren zwei Lichtquellen 9 angeordnet. Die Längsachse des Einsteckzapfens 6 ist hierbei unter einem von 0° verschiedenen Winkel, nämlich rechtwinklig, zu der Längsachse des verstellbaren Besfestigungselements 7 angeordnet, um eine sichere und einstellbare Montage der Fahrzeugleuchte 1 zu gewährleisten. Durch eine Verstellung des verstellbaren Befestigungselements 7 in axialer Richtung, kann eine optimale und schlüssige Ausrichtung der Fahrzeugleuchte 1 zur sichtbaren Kante der Kofferrraumklappe 2 erfolgen, indem der in Figur 2 rechtsgelegene Teil der Fahrzeugleuchte 1 um den als Schwenklagerstelle dienenden Einsteckzapfen 6 verschwenkt wird.

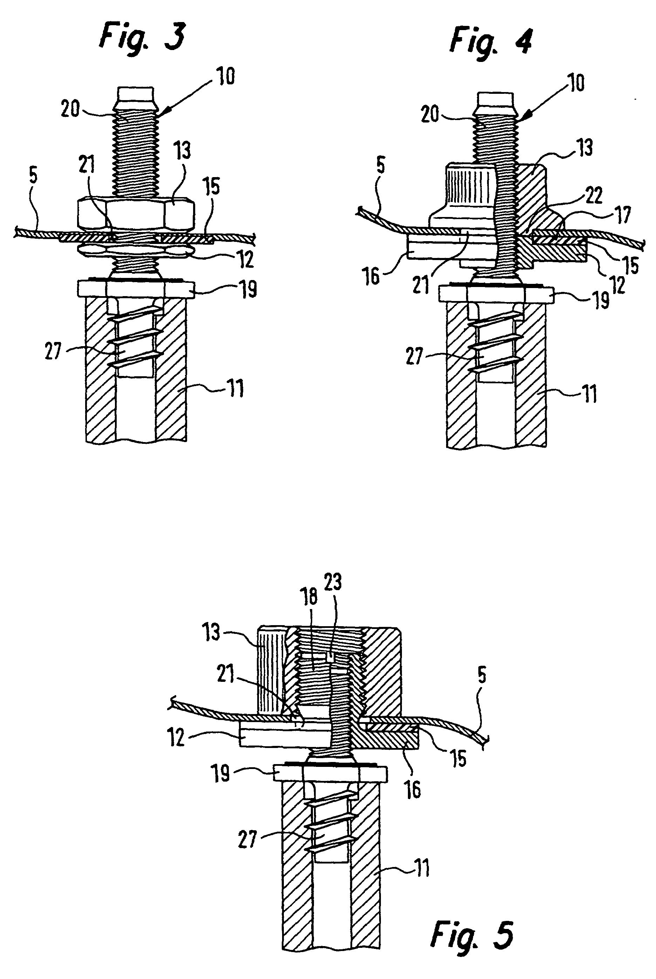

In Figur 3 ist das einen Gewindebolzen 20 aufweisenden verstellbare Befestigungselement 7 dargestellt, wobei der Gewindebolzen 20 in eine an der Fahrzeugleuchte 1 angeformten Hülse 11 eingeschraubt ist. Hierfür weist der Gewindebolzen 20 einen Abschnitt mit einem selbstschneidenden Gewinde 27 auf, welches in die Hülse 11 eingeschraubt ist. Das Einschrauben erfolgt über einen an dem Gewindebolzen 20 angeformten Sechskant 19. Jenseits des Sechskants 19 befindet sich auf dem Gewindebolzen 20 ein Einstellgewinde 10, über das die Einstellung und Befestigung der Fahrzeugleuchte 1 erfolgt. Hierfür wird auf das Einstellgewinde 10 zunächst eine selbsthemmende Einstellmutter 12 aufgeschraubt. Eine selbsthemmende Einstellmutter 12 hat dabei den Vorteil, dass eine ungewollte und selbständige Verstellung der Einstellmutter 12 auf dem Einstellgewinde 10 ausgeschlossen wird. Dann wird der Gewindebolzen 20 von der Fahrzeugkarosserieaußenseite her durch eine Aussparung 21 in der Fahrzeugkarosserie 5 gesteckt. Durch Verstellen der Einstellmutter 12 auf dem Einstellgewinde 10 wird die Einstecktiefe und damit Verstellung der Fahrzeugleuchte 1 bewirkt. Nachdem die optimale Einstellung der Einstellmutter 12 gefunden ist, wird nun die Befestigungsmutter 13 von der Fahrzeugkarosserieinnenseite her auf das Einstellgewinde 10 aufgeschraubt. Dadurch wird die Fahrzeugkarosserie 5 gegen die Einstellmutter 12 klemmt. Zwischen der Einstellmutter 12 und der Fahrzeugkarosserie 5 ist hierbei eine Dichtungsscheibe 15 angeordnet, die die Fahrzeugkarosserieinnenseite gegen das Eindringen von Wasser, Feuchtigkeit, Staub, Schmutz und dergl. abdichtet. Als Einstellmutter 12 sowie als Befestigungsmutter 13 finden herkömmliche, normgerechte, und damit kostengünstige Bauteile Verwendung.

Die in Figur 4 dargestellte Einstellmutter 12 weist einen Bund
16 auf, auf welchem der Dichtungsring 15 aufliegt. Die von dem Dichtungsring 15 umgebene Stirnseite der Einstellmutter 12 ist dabei so ausgebildet, dass sie in die, an der Fahrzeugkarosserie 5 angeordnete Aussparung 21, hineingreifen kann. Die ebenfalls auf dem Einstellgewinde 10 angeordnete Befestigungsmutter 13 weist auf der der Einstellmutter 12 zugewandten Seite einen zylindrischen Absatz 22 auf, der in die Aussparung 21 eingreift. Wird nun die Befestigungsmutter 13 auf den Gewindebolzen 20 aufgeschraubt und angezogen, so wirkt die Stirnseite des zylindrischen Ansatzes 22 als Anschlag gegen die von dem Dichtungsring 15 umgebene Stirnseite der Einstellmutter 12. Der zylindrische Ansatz 22 übernimmt dabei, in Verbindung mit der mit ihm korrespondierenden Stirnseite der Einstellmutter 12, die Funktion eines Distanzstückes, durch welches ein eine Mindestgröße aufweisender Aufnahmeraum 17 für eine elastische Dichtung 15 gebildet wird. Dadurch wird erreicht, dass die Dichtung beim Einschrauben und Anziehen der Befestigungsmutter 13 nicht zu stark gequetscht und beschädigt wird. Die Befestigungsmutter 13 ist außerdem als Rändelmutter audgebildet, welche von Hand betätigt werden kann. Außerdem ist es denkbar, dass an der Einstellmutter 12 Betätigungsmittel zur Verstellung der Einstellmutter vorgesehen sind, die von der Fahrzeugkarosserieinnenseite aus durch die Aussparung 21 zugänglich sind.

Die in Figur 5 gezeigte Einstellmutter 12 ist als Einstellschraube ausgebildet. Zum einen weist der dem Sechskant 19 zugewandte Teil der Einstellschraube 12 einen Bund 16 auf, auf dessen der, der Fahrzeugkarosserie 5 zugewandten Seite, die Dichtungsscheibe 15 aufgelegt ist. Der andere, dem Sechskant 19 abgewandte Teil der Einstellschraube 12, ragt hierbei durch die Aussparung 21 und weist auf seiner Stirnfläche einen geschlossenen Schraubenkopf mit einem Schraubenschlitz 23 auf. Die Verstellung der Einstellschraube 12 erfolgt hierbei mittels eines herkömmlichen Schraubendrehers für Schlitzschrauben. Außerdem ist an dem Mantel des durch die Fahrzeugkarosserie 5 hindurchragenden Teils der Einstellschraube 12 ein Gewinde 18 vorgesehen, auf welches die Befestigungsmutter 13 aufgeschraubt ist. Dabei ist die Befestigungsmutter 13 so ausgebildet, dass sie von Hand gegen die Fahrzeugkarosserie 5 geschraubt wird, wodurch die Einstellmutter 12 und die Dichtung 15 gegen die Fahrzeugkarosserie 5 verklemmt werden und die Befestigung der Fahrzeugleuchte erfolgt.

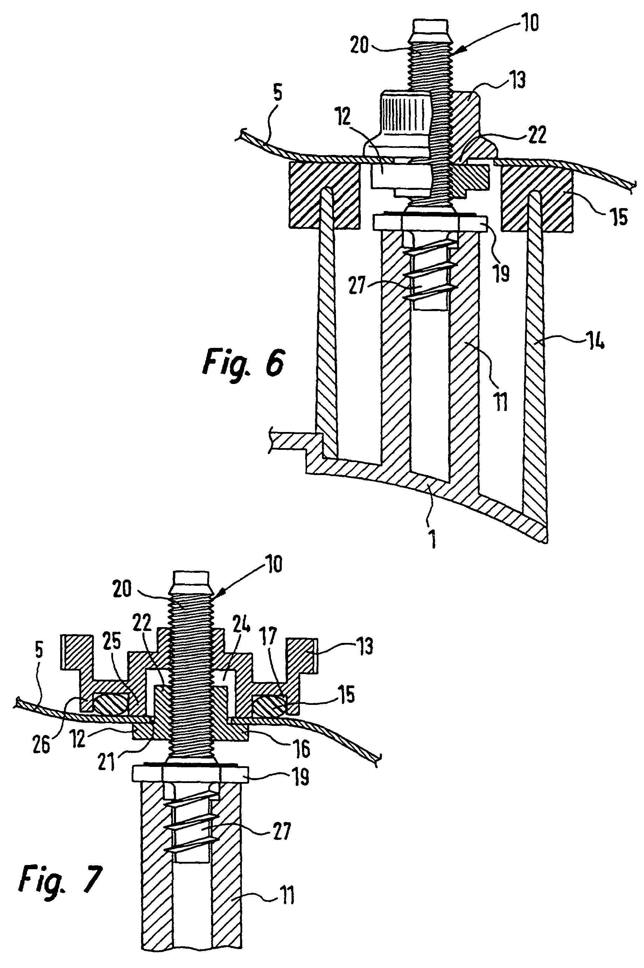

In Figur 6 ist um die Hülse 11, in welche der Gewindebolzen 20 eingeschraubt ist, an das Gehäuse der Fahrzeugleuchte 1 ein hülsenartiger Aufnahmedom 14 angeformt, auf dessen freier Stirnseite ein Dichtungsring 15 angeordnet ist, an dem die Fahrzeugkarosserie 5 anliegt. Dadurch kann ein Aufnahmeraum zwischen der Einstellmutter 12 und/oder der Befestigungsmutter 13 und der Fahrzeugkarosserie 5 für eine Dichtung entfallen.

Die in Figur 7 dargestellte Einstellmutter 12 weist einen auf der Fahrzeugkarosserie 5 aufliegenden Bund auf, sowie einen zylindrischen Ansatz 22, der durch die Aussparung 21 an der Fahrzeugkarosserie 5 hindurchragt. Durch dieses teilweise Hindurchragen der Einstellmutter 12 durch die Aussparung 21 kann die Einstellmutter 12 von der Fahrzeugkarosserieinnenseite aus, sei es von Hand oder sei es mittels eines Werkzeuges, verstellt werden. Die auf das Einstellgewinde 10 aufgeschraubte Befestigungsmutter 13 ist dabei als von Hand betätigbare Rändelmutter ausgebildet. Die Befestigungsmutter 13 weist außerdem auf der der Einstellmutter 12 zugewandten Seite eine Zylindersenkung 24 auf, in welcher der zylindrische Ansatz 22 der Einstellmutter 12 berührungsfrei angeordnet ist. Der die Zylindersenkung 24 umgebende Innensteg 25 der Befestigungsmutter 13 klemmt, bei aufgeschraubter Befestigungsmutter 13, die Fahrzeugkarosserie 5 gegen den Bund 16 der Einstellmutter 12, wodurch die Befestigung der Fahrzeugleuchte 1 an der Fahrzeugkarosserie 5 erfolgt. Auf der dem Gewindebolzen 20 abgewandten Seite des Innensteges 25 der Befestigungsmutter 13 ist ein Aufnahmeraum 17 zur Aufnahme des Dichtungsringes 15 angeordnet. Damit eine gewünschte Verformung der Dichtung 15 bei eingebautem Zustand der Befestigungsmutter 13 gewährleistet ist, ist der den Aufnahmeraum 17 nach außen hin begrenzende Außensteg 26 der Befestigungsmutter 13 so ausgebildet, dass seine der Fahrzeugkarosserie 5 zugewandte Stirnseite auf dieser nicht zum Auflegen kommt. Dadurch wird gewährleistet, dass eine definierte Anpresskraft auf die Dichtung 5 wirkt, und diese entsprechend, in gewünschter Weise, verformt wird.

## Patentansprüche

1. Fahrzeugleuchte (1) mit verstellbarer Befestigung, insbesondere Heckleuchte für Kraftfahrzeuge, mit einem an der Vorderseite der Fahrzeugleuchte (1) durch eine Lichtscheibe (8) geschlossenen Gehäuse, mit mindestens einer in dem Gehäuse angeordneten Lichtquelle (9), mit mehreren Befestigungselementen (6) zur Befestigung der Fahrzeugleuchte an der Fahrzeugkarosserie (5), mit mindestens einem einen Gewindebolzen (20) aufweisenden verstellbaren Befestigungselement (7) und mit einer auf der dem Gehäuse abgewandten Seite der Fahrzeugkarosserie (5) angeordneten Befestigungsmutter (13), wobei der Gewindebolzen (20) durch eine Aussparung (21) in der Fahrzeugkarosserie (5) steckbar und mit der Befestigungsmutter (13) verschraubbar ist, wobei auf dem Gewindebolzen (20) ein Einstellgewinde (10) vorhanden ist und dass auf dem Einstellgewinde (10) zwischen dem Gehäuse und der Fahrzeugkarosserie (5) eine Einstellmutter (12) angeordnet ist, mit der die Fahrzeugleuchte in axialer Richtung des Gewindebolzens (20) verstellbar ist, **dadurch gekennzeichnet, dass** die Befestigungselemente (6) als nicht verstellbare Einsteckzapfen (6) ausgebildet sind, dass die jeweils in eine entsprechende Aussparung in der Fahrzeugkarosserie (5) einsteckbar, insbesondere einschnappbar, ausgestaltet sind, dass die Mittelachsen der Einsteckzapfen (6) in einem von 0° bzw. 180° verschiedenen Winkel zu der Mittelachse des Gewindebolzens (20), vorzugsweise in einem Winkel von etwa 90°, verlaufen, und dass an dem Gehäuse auf den Eckpunkten eines Dreiecks liegend zwei nicht verstellbaren Einsteckzapfen (6) und ein verstellbares Befestigungselement (7) vorgesehen sind.

2. Fahrzeugleuchte (1) nach Anspruch 1, **dadurch gekennzeichnet, dass** die von dem Gewindebolzen (20) durchgriffene Aussparung (21) durch eine elastische Dichtung (15) abgedichtet ist.

3. Fahrzeugleuchte nach Anspruch 2, **dadurch gekennzeichnet, dass** die elastische Dichtung (15) in Form eines Dichtungsringes oder einer Dichtungsscheibe zwischen der Einstellmutter (12) und der Fahrzeugkarosserie (5) oder zwischen der Befestigungsmutter (13) und der Fahrzeugkarosserie (5) angeordnet und zwischen diesen eingespannt ist.

4. Fahrzeugleuchte nach Anspruch 2, **dadurch gekennzeichnet, dass** die elastische Dichtung (15) zwischen der Fahrzeugkarosserie (5) und der Stirnseite eines an das Gehäuse angeformten hülsenartigen Aufnahmedomes (14) für den Gewindebolzen (20) eingespannt ist.

5. Fahrzeugleuchte nach Anspruch 2 bis 4, **dadurch gekennzeichnet, dass** die Einstellmutter (12) und die Befestigungsmutter (13) über ein Distanzstück (22) derartig gegeneinander verspannt sind, dass ein eine Mindestgröße aufweisender Aufnahmeraum (17) für die elastische Dichtung (15) gebildet ist.

6. Fahrzeugleuchte nach Anspruch 5, **dadurch gekennzeichnet, dass** das Distanzstück (22) ein separates Bauteil ist, insbesondere eine innerhalb der Aussparung (21) der Fahrzeugkarosserie (5) zwischen der Einstellmutter (12) und der Befestigungsmutter (13) angeordnete Unterlegscheibe entsprechender Dicke.

7. Fahrzeugleuchte nach Anspruch 5, **dadurch gekennzeichnet, dass** das Distanzstück (22) einstückig mit der Einstellmutter (12) oder mit der Befestigungsmutter (13) ausgebildet ist.

8. Fahrzeugleuchte nach Anspruch 7, **dadurch gekennzeichnet, dass** das Distanzstück (22) einen Anschlag an der einen Mutter (12, 13) umfasst, der mit einem Gegenanschlag an der anderen Mutter (12, 13) zusammenwirkt.

9. Fahrzeugleuchte nach einem der vorhergehenden Ansprüche, **dadurch gekennzeichnet, dass** an der Einstellmutter (12) von der dem Gehäuse abgewandten Seite der Fahrzeugkarosserie (5) zugängliche Betätigungsmittel (23) zur Verstellung der Einstellmutter (12) vorgesehen sind.

10. Fahrzeugleuchte (1) nach einem der vorhergehenden Ansprüche, **dadurch gekennzeichnet, dass** die Einstellmutter (12) einen radial abstehenden Bund (16) zur Anlage an den die Aussparung (21) umgebenden Bereich der Fahrzeugkarosserie (5) aufweist und dass die Einstellmutter (12), zumindest teilweise, durch die Aussparung (21) auf die von der Fahrzeugleuchte abgewandten Seite der Fahrzeugkarosserie (5) hindurchragt.

11. Fahrzeugleuchte nach Anspruch 10, **dadurch gekennzeichnet, dass** an dem durch die Aussparung (21) in der Fahrzeugkarosserie (5) hindurchragenden Teil (22) der Einstellmutter (12) Mittel (23) zur Betätigung der Einstellmutter (12) vorgesehen sind, insbesondere Mittel für die Betätigung mit einem Spezialwerkzeug.

12. Fahrzeugleuchte nach Anspruch 10 oder 11, **dadurch gekennzeichnet, dass** der durch die Aussparung (21) in der Fahrzeugkarosserie (5) hindurchragende Teil (22) der Einstellmutter (12) mit einem Gewinde (18) versehen ist, welche mit der Befestigungsmutter (13) verschraubbar ist.

13. Fahrzeugleuchte nach einem der vorhergehenden Ansprüche, **dadurch gekennzeichnet, dass** die Befestigungsmutter (13) für eine manuelle Betätigung ausgebildet ist, vorzugsweise als Flügel- oder Rändelmutter.

14. Fahrzeugleuchte nach einem der vorhergehenden Ansprüche, **dadurch gekennzeichnet, dass** die Einstellmutter (12) und die Befestigungsmutter (13) Muttern von gewöhnlicher, herkömmlicher Art sind, vorzugsweise allgemein gebräuchliche Normteile.

15. Fahrzeugleuchte nach einem der vorhergehenden Ansprüche, **dadurch gekennzeichnet, dass** die Einstellmutter (12) in Bezug auf das Einstellgewinde (10) selbsthemmend ausgebildet ist.

## Claims

1. A vehicle light (1) with an adjustable fixation, in particular a taillight for motor vehicles, having a housing closed on the front side of the vehicle light (1) by a lens (8) of the light, having at least one light source (9) located in the housing, having a plurality of fixation elements (6), for fixing the vehicle light to the vehicle body (5), having at least one adjustable fixation element (7) that has a threaded bolt (20), and having a fixation nut (13), located on the side of the vehicle body (5) facing away from the housing, the threaded bolt (20) being insertable through a recess (21) in the vehicle body (5) and capable of being screwed to the fixation nut (13), and an adjusting thread (10) is present on the threaded bolt (20), and an adjusting nut (12), with which the vehicle light is adjustable in the axial direction of the threaded bolt (20), is located on the adjusting thread (10) between the housing and the vehicle body (5), **characterized in that** the fixation elements (6) are embodied as nonadjustable insertion pegs (6), which are each designed to be insertable into a corresponding recess in the vehicle body (5), in particular to be snapped into it; that the center axes of the insertable pegs extend at an angle other than 0° or 180° to the center axis of the threaded bolt (20), preferably at an angle of approximately 90°; and that two nonadjustable insertion pegs (6) and one adjustable fixation element (7) are provided on the housing, located at the corners of a triangle.

2. The vehicle light (1) of claim 1, **characterized in that** the recess (21) through which the threaded bolt (20) extends is sealed off by an elastic seal (15).

3. The vehicle light of claim 2, **characterized in that** the elastic seal (15) in the form of a sealing ring or a sealing disk is located between the adjusting nut (12) and the vehicle body (5), or between the fixation nut (13) and the vehicle body (5), and is fastened in place between them.

4. The vehicle light of claim 2, **characterized in that** the elastic seal (15) is fastened in place between the vehicle body (5) and the face end of a tubular receiving dome (14), integrally formed onto the housing, for the threaded bolt (20).

5. The vehicle light of claims 2 through 4, **characterized in that** the adjusting nut (12) and the fixation nut (13) are braced against one another via a spacer (22) in such a way that a receiving chamber (17) having a minimum size is formed for the elastic seal (15).

6. The vehicle light of claim 5, **characterized in that** the spacer (22) is a separate component, in particular a shim of suitable thickness located inside the recess (21) of the vehicle body (5), between the adjusting nut (12) and the fixation nut (13).

7. The vehicle light of claim 5, **characterized in that** the spacer (22) is embodied integrally with the adjusting nut (12) or with the fixation nut (13).

8. The vehicle light of claim 7, **characterized in that** the spacer (22) includes a stop on one nut (12, 13), which cooperates with a counterpart stop on the other nut (12, 13).

9. The vehicle light of one of the foregoing claims, **characterized in that** actuating means (23), accessible from the side of the vehicle body (5) facing away from the housing, are provided on the adjusting nut (12) for adjusting the adjusting nut (12).

10. The vehicle light (1) of one of the foregoing claims, **characterized in that** the adjusting nut (12) has a radially protruding collar (16) for contact with the region of the vehicle body (5) surrounding the recess (21); and that the adjusting nut (12) protrudes at least partway through the recess (21) to the side of the vehicle body (5) facing away from the vehicle light.

11. The vehicle light of claim 10, **characterized in that** means (23) for actuating the adjusting nut (12), in particular for means for actuation with a special tool, are provided on the part (22) of the adjusting nut (12) that protrudes through the recess (21) in the vehicle body (5).

12. The vehicle light of claim 10 or 11, **characterized in that** the part (22) of the adjusting nut (12) that protrudes through the recess (21) in the vehicle body (5) is provided with a thread (18) which can screwed to the fixation nut (13).

13. The vehicle light of one of the foregoing claims, **characterized in that** the fixation nut (13) is embodied for manual actuation, preferably as a wing nut or knurled nut.

14. The vehicle light of one of the foregoing claims, **characterized in that** the adjusting nut (12) and the fixation nut (13) are nuts of a customary, conventional type, preferably widely usable standard parts.

15. The vehicle light of one of the foregoing claims, **characterized in that** the adjusting nut (12) is embodied as self-locking relative to the adjusting thread (10).

## Revendications

1. Feu de véhicule (1) avec fixation ajustable, notamment un feu arrière pour véhicule avec un boîtier fermé par un disque de lumière (8) à l'avant du feu du véhicule (1), avec au moins une source lumineuse (9) placée dans le boîtier, avec une pluralité d'éléments de fixation (6), pour la fixation du feu de véhicule sur la carrosserie du véhicule (5) avec au moins un élément de fixation ajustable (7) présentant un boulon fileté (20) et un écrou de serrage (13) placé sur le côté de la carrosserie du véhicule (5) opposé au boîtier, dans lequel le boulon fileté (20) est enfichable au moyen d'un évidement (21) dans la carrosserie du véhicule (5) et qui est vissable par l'écrou de serrage (13), dans lequel le boulon fileté (20) est muni d'un filetage de réglage (10) et un écrou de réglage (12) est placé sur le filetage de réglage (10) entre le boîtier et la carrosserie du véhicule (5), avec lequel le feu de véhicule est ajustable dans le sens axial du boulon fileté (20), **caractérisé en ce que** les éléments de fixation (6) sont conçus comme des tenons emboîtés non ajustables (6), qui sont enfichables et notamment encliquetables dans l'évidement correspondant de la carrosserie du véhicule (5), **en ce que** les axes médians des tenons emboîtés (6) sont dans un angle de 0° à 180° par rapport à l'axe médian du boulon fileté (20), de préférence dans un angle d'environ 90°, et **en ce que** sur le boîtier, posés sur les points d'angle d'un triangle, deux tenons emboîtés non ajustables (6), ainsi qu'un élément de fixation ajustable (7) sont prévus.

2. Feu de véhicule (1) selon la revendication 1, **caractérisé en ce que** l'évidement (21) occupé par le boulon fileté (20), est rendu étanche par une garniture élastique (15).

3. Feu de véhicule selon la revendication 2, **caractérisé en ce que** la garniture élastique (15) en forme anneau d'étanchéité ou de joint plat est placée entre l'écrou de réglage (12) et la carrosserie du véhicule (5) ou entre l'écrou de serrage (13) et la carrosserie du véhicule (5) et est serrée entre ceux-ci.

4. Feu de véhicule selon la revendication 2, **caractérisé en ce que** la garniture élastique (15) entre la carrosserie du véhicule (5) et la face avant d'un dôme de logement en forme de douille formé sur le boîtier en forme de douille (14) est enserrée pour le boulon fileté (20).

5. Feu de véhicule selon les revendications 2 à 4, **caractérisé en ce que** l'écrou de réglage (12) et l'écrou de serrage (13) sont serrés l'un contre l'autre le long d'une pièce intercalaire (22), et **en ce qu'**un espace de réception (17) présentant une taille minimale est formé pour la garniture élastique (15).

6. Feu de véhicule selon la revendication 5, **caractérisé en ce que** la pièce intercalaire (22) est une pièce séparée, notamment une rondelle d'épaisseur correspondante placée à l'intérieur de l'évidement (21) de la carrosserie du véhicule (5) entre l'écrou de réglage (12) et l'écrou de serrage (13).

7. Feu de véhicule selon la revendication 5, **caractérisé en ce que** la pièce intercalaire (22) forme une seule pièce avec l'écrou de réglage (12) ou l'écrou de serrage (13).

8. Feu de véhicule selon la revendication 7, **caractérisé en ce que** la pièce intercalaire (22) comprend une butée sur l'un écrou (12, 13) qui agit avec une contrebutée sur l'autre écrou (12, 13).

9. Feu de véhicule selon l'une quelconque des revendications précédentes, **caractérisé en ce que** sur l'écrou de réglage (12), des moyens d'actionnement (23) accessibles pour ajuster l'écrou de réglage (12) sont prévus sur le côté de la carrosserie du véhicule (5) opposé au boîtier.

10. Feu de véhicule (1) selon l'une quelconque des revendications précédentes, **caractérisé en ce que** l'écrou de réglage (12) présente un collet placé radialement (16) pour être installé sur la zone entourant l'évidement (21) de la carrosserie du véhicule (5) et **en ce que** l'écrou de réglage (12), fait saillie, au moins partiellement, à travers l'évidement (21) sur le côté de la carrosserie du véhicule (5) opposé au feu de véhicule.

11. Feu de véhicule selon la revendication 10, **caractérisé en ce que** sur la pièce faisant saillie (22) de l'écrou de réglage (12) à travers l'évidement (21) dans la carrosserie du véhicule (5), des moyens (23) sont prévus pour actionner l'écrou de réglage (12), notamment des moyens pour l'actionnement avec un outil spécial.

12. Feu de véhicule selon la revendication 10 ou 11, **caractérisé en ce que** la pièce faisant saillie (22) de l'écrou de réglage (12) à travers l'évidement (21) dans la carrosserie du véhicule (5) est munie d'un filetage (18) qui est vissable avec l'écrou de serrage (13).

13. Feu de véhicule selon l'une quelconque des revendications précédentes, **caractérisé en ce que** l'écrou de serrage (13) est formé pour un actionnement manuel, de préférence comme écrou à oreilles ou écrou moleté.

14. Feu de véhicule selon l'une quelconque des revendications précédentes, **caractérisé en ce que** l'écrou de réglage (12) et l'écrou de serrage (13), sont des écrous d'un type courant et habituel, de préférence des pièces normalisées d'utilisation courante.

15. Feu de véhicule selon l'une quelconque des revendications précédentes, **caractérisé en ce que** l'écrou de réglage (12) est autobloquant par rapport au filetage de réglage (10).
